# FASCICULE DE BREVET EUROPEEN

(11) **EP 0 459 867 B1**
(45) Date de publication et mention de la délivrance du brevet: **09.03.1994**
(21) Numéro de dépôt: 91401308.1
(22) Date de dépôt: 21.05.1991
(51) Int. Cl.: B60S 1/40

(54) **Dispositif de liaison à articulation entre un bras d'essuie-glace et un balai d'essuie-glace**
Gelenkverbindung zwischen einem Scheibenwischerarm und einem Scheibenwischerblatt
Pivot link between a windshield wiper arm and a windshield wiper blade

(30) Priorité: 23.05.1990 FR 9006433
(43) Date de publication de la demande: 04.12.1991
(73) Titulaire: PAUL JOURNEE S.A., F-92707 Colombes Cédex (FR)
(72) Inventeur: Journée, Maurice, F-60240 Reilly (FR); Beneteau, Pierre, F-54730 Gorcy (FR); Jehannet, Jean Pierre, F-27200 Vernon (FR)
(74) Mandataire: Lemaire, Marc

(56) Documents cités:
- EP-A- 0 337 042
- DE-U- 8 522 252
- FR-A- 2 310 243

## Description

La présente invention se rapporte à un dispositif de liaison à articulation entre un balai d'essuie-glace et un bras d'essuie-glace, notamment pour véhicules automobiles.

Habituellement, il est prévu pour assurer cette liaison à articulation entre les deux éléments, de disposer un fourreau dans une ouverture portée par le dos de l'étrier principal du balai, ouverture généralement rectangulaire à flancs sensiblement parallèles deux à deux. Un axe d'articulation est porté soit par le balai, soit par le fourreau, et il est rapporté, autour dudit axe, un élément de liaison, dit connecteur, permettant de relier cet axe avec l'extrémité d'un bras d'essuie-glace pénétrant dans cette ouverture.

Pour des raisons d'esthétisme et d'aérodynamisme, il est de plus en plus envisagé d'élaborer des extrémités de bras d'essuie-glace qui masquent l'ouverture du balai, en la recouvrant, tout en assurant de manière convenable la liaison à articulation avec le balai.

De telles extrémités de bras, généralement en section de forme en "U" inversé, sont difficilement aménageables avec les dispositifs de liaison de l'art antérieur et nécessitent une multiplicité de pièces qui compliquent le montage ou démontage et augmentent le coût desdits dispositifs.

Le but de la présente invention est de disposer d'un dispositif de liaison à articulation entre une extrémité d'un bras recouvrant un balai qui soit d'une conception très simple et de manipulation très aisée, lors du montage/démontage.

Selon la présente invention, le dispositif de liaison à articulation entre un bras d'essuie-glace et un balai d'essuie-glace, le balai présentant une ouverture apte à recevoir un fourreau et ledit bras présentant en section une forme de "U" inversé au moins dans la région de l'ouverture dudit balai et apte à recouvrir ladite ouverture en portant un moyen de verrouillage reliant à articulation le bras avec le balai est caractérisé en ce que le fourreau porte des moyens de butée en translation et/ou en rotation du bras par rapport au balai.

Grâce à l'invention, le bras est relié au balai d'une manière très simple tout en étant guidé parfaitement par rapport à celui-ci.

Divers modes de réalisation de l'invention sont précisés dans les revendications dépendantes.

Les autres caractéristiques et avantages vont ressortir maintenant de la description qui va suivre, donnée à titre d'exemple, en se référant aux figures annexées sur lesquelles:
- la figure 1 montre, en perspective, les différents éléments servant à la liaison à articulation, selon l'invention, entre le bras et le balai;
- la figure 2 montre, en perspective, tous les éléments de la figure 1 montés;
- la figure 3 montre une vue en coupe partielle selon le plan A-A de la figure 2;
- la figure 4 est une vue montrant un des éléments du dispositif de liaison selon l'invention;
- la figure 5 est une vue de côté selon la figure 4;
- la figure 6 montre une autre vue, en perspective, d'une variante de l'invention.

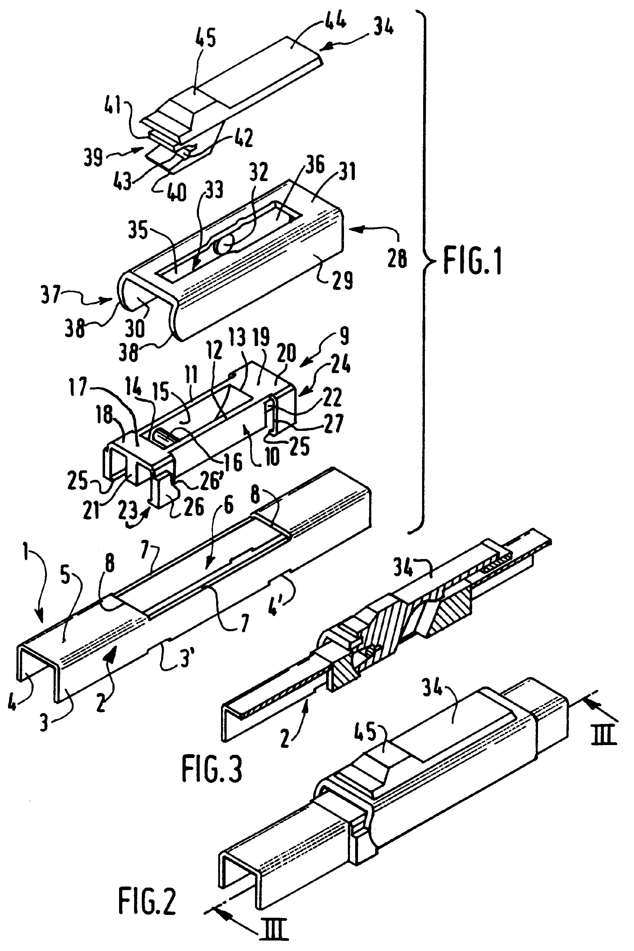

On se réfère maintenant aux figures 1 à 5 qui montrent en 1 le balai d'essuie-glace, représenté que partiellement pour simplifier la suite de la description. Ce balai d'essuie-glace comporte habituellement une armature porteuse d'une lame d'essuie-glace constituée d'un étrier principal 2 aux extrémités duquel est articulé au moins un étrier intermédiaire portant la lame d'essuie-glace.

Pour des raisons de simplification dans la suite de la description, seul l'étrier principal 2 a été représenté sur cette figure.

Cet étrier principal présente en section une forme de "U" inversé à deux flancs 3,4 sensiblement parallèles l'un à l'autre et reliés par un dos 5.

C'est à partir de ce dos 5 qu'est prévue une ouverture 6, de forme générale rectangulaire, dont les grands côtés 7 sont confondus avec l'intersection des flancs 3,4 et du dos 5 et dont les petits côtés 8 délimitent dans le sens longitudinal cette ouverture.

L'ouverture 6 est apte à recevoir un fourreau 9, également de forme généralement rectangulaire et correspondant aux dimensions longitudinales et transversales de cette ouverture.

Le fourreau 9 présente un corps évidé 10 de forme généralement rectangulaire présentant deux parois longitudinales 11,12 sensiblement parallèles entre elles et délimitées à leur extrémités par deux parois transversales 13,14, ces parois délimitant un évidement 15.

Dans cet évidement est prévu un axe d'articulation 16, disposé parallèlement aux parois transversales 13, et pouvant être monobloc avec le corps 10.

Bien entendu, et de manière connue en soi, l'axe d'articulation peut être porté par l'étrier principal 2 et cela au niveau de son ouverture 6 et, dans ce cas, le corps évidé 10 présentera deux nervures débouchant en direction de cet axe pour permettre l'introduction du fourreau 9 dans cette ouverture.

Le corps évidé se poursuit par un tablier avant 17, considéré à gauche à partir de la figure 1, ce tablier consistant en une paroi plane 18 issue du bord supérieur de la paroi transversale 14 et par un tablier arrière 19, considéré à droite à partir de la figure 1, et consistant également en une paroi plane 20 issue de la paroi transversale 13 du corps évidé 10, ces tabliers étant rigidifiés par rapport à leurs parois transversales respectives par des nervures de raidissement 21,22 disposées orthogonalement, d'une part, par rapport aux parois transversales 13,14 et, d'autre part, par rapport aux parois planes 18,20.

Le tablier avant 17 porte des pattes avant 23 disposée sensiblement parallèlement aux parois longitudinales 11,12 en étant disposées à distance de celles-ci et le tablier arrière porte des pattes arrière 24 disposées de manière identique aux pattes avant 23.

Les pattes 23,24 portent à leur extrémité libre, opposée à celle où elles sont ancrées aux tabliers respectifs, des saillies d'accrochage 25.

Les dimensions du fourreau ainsi constitué sont telles que la dimension longitudinale, considérée entre les deux parties extrêmes des tabliers 17,19, correspond à la longueur de l'ouverture 6, la dimension considérée entre les deux faces externes des parois longitudinales 11,12 correspond à la dimension interne considérée entre les deux faces internes des parois 3,4 de l'étrier principal 2, la dimension entre les deux pattes avant et arrière considérée entre les faces internes de ces pattes correspond à la dimension considérée entre les faces externes des flancs 3,4 dudit étrier principal 2.

Ainsi, une fois le fourreau disposé dans l'ouverture 6 de l'étrier principal 2, les parties extrêmes des tabliers 18,19 sont confondues avec les petits côtés 8 de l'ouverture 6, les parois longitudinales 11,12 du corps évidé 10 sont en contact avec les faces internes des flancs 3,4, le bord supérieur desdites parois affleurant les bords 7 de l'ouverture 6, et les pattes 23,24 s'appuient sur les faces externes desdits flancs.

De préférence, il est prévu que les flancs 3,4 présentent à leur extrémité libre des évidements 3',4' servant de moyens de verrouillage du fourreau 9 et aptes à coopérer avec les saillies d'accrochage 25 prévues aux extrémités libres des pattes avant et arrière 23,24.

Les pattes avant 23 portent, sur leurs faces externes, une protubérance 26 présentant, à l'opposé de leur partie correspondant au prolongement de l'extrémité libre de la paroi plane 18, une portion de paroi circulaire 26' servant de butée avant et dont le rôle sera explicité par la suite.

Les pattes arrière 24 portent, également, à l'opposé de leur extrémité correspondant au prolongement de l'extrémité libre de la paroi 20, une surface cylindrique 27 prévue dans l'épaisseur desdites pattes et servant de butée arrière.

L'extrémité du bras d'essuie-glace 28 présente, au niveau de sa liaison avec le balai 1, une section une forme de "U" inversé à flancs sensiblement parallèles 29,30 et reliés par un dos 31.

Au moins un des flancs 29,30 présente une saillie 32 dirigée vers l'intérieur du "U" et de forme, ici, circulaire.

De plus, il est prévu sur le dos 31 une ouverture 33 apte à recevoir un verrou 34, cette ouverture présentant une première partie sensiblement rectangulaire 35 se prolongeant par une deuxième partie 36 également sensiblement rectangulaire mais de dimension transversale plus grande.

L'extrémité libre 37 de l'extrémité du bras 28 présente sur les flancs 29,30 des parties circulaires 38 de forme complémentaire aux surfaces cylindriques 26′ portées par les pattes avant 23.

Le verrou 34 présente une partie d'accrochage 39 de dimensions légèrement inférieures à la première partie rectangulaire 35 de l'ouverture 33 et constituée de deux branches 40,41 élastiques l'une par rapport à l'autre en délimitant un logement cylindrique 42 ouvert aux deux extrémités et présentant, à partir d'un de ses bords longitudinaux, une fente 43 de forme triangulaire servant de rampe de montage.

Le verrou 34 présente une surface plane 44 munie d'une saillie de préhension 45 disposée au voisinage de la partie d'accrochage 39.

Le montage des divers éléments se fait d'abord par emboîtement du fourreau 9 dans l'ouverture 6 de l'étrier principal, de manière à ce que les pattes 23,24 soient situées sur les faces externes des flancs 3,4 de l'étrier, les saillies d'accrochage 25 venant s'encliqueter dans les évidements 3',4'.

Le verrou 34 est rapporté sur le bras et plus précisément la partie d'accrochage 39 pénètre dans la partie rectangulaire 36 prévue sur le dos 31 de l'extrémité 28.

Une fois cet assemblage effectué, l'extrémité 28 du bras est ensuite rapportée sur l'ensemble constitué du fourreau 9 et de l'étrier 2 de manière à ce que, d'une part, la paroi interne du dos 31 s'appuie sur ce fourreau 9 et, d'autre part, les parties circulaires 38 du bras 28 viennent s'appuyer sur les surfaces cylindriques 26′ du fourreau 9, alors que la saillie 32 du bras 28 vient coulisser sur la surface cylindrique 27 du fourreau 9 définie précédemment. Dans cette position, les parois internes des flancs 29,30 de l'extrémité du bras 28 viennent glisser respectivement sur les faces externes des pattes 23,24, plus précisément les parois internes situées au voisinage de l'extrémité 37 viennent glisser sur la face externe des pattes 23 comprises entre les surfaces cylindriques 26′ et le bord latéral desdites pattes.

Par un mouvement considéré sur la figure 1 de droite à gauche, le verrou 34 coulisse de manière à ce que les branches 40,41 dudit verrou s'effacent élastiquement pour pouvoir glisser autour de l'axe d'articulation 16 porté, soit par l'étrier principal, soit par le fourreau 9, de manière à lier le bras portant le verrou avec l'axe d'articulation 16.

Une fois cet assemblage assuré, les surfaces cylindriques 26′ portées par les pattes 23 servent de butée en translation pour l'extrémité du bras vis-à-vis du balai et, de même, les surfaces cylindriques 27 associées à la saillie 32 servent de butée en translation dans une autre direction pour le bras vis-à-vis de ce balai.

Comme il peut être remarqué sur les figures, les faces internes des flancs 29,30 du bras coulissent sur les faces externes des pattes 23,24 et n'assurent plus un contact métal sur métal mais un contact métal sur plastique, ce qui améliore la qualité de l'articulation en ne générant aucun bruit et une usure moindre.

Ainsi, une fois les divers éléments assemblés, le balai peut pivoter autour de l'axe 16 grâce au verrou 34, le bras étant emprisonné entre ce verrou et le balai et les surfaces 26′,27 associées aux parties circulaires 38 et à la saillie 32 forment une butée en translation dans les deux sens pour le bras 28 par rapport au balai 1 en autorisant le débattement du balai par coulissement des parties circulaires 38 et de la saillie 32 sur les surfaces 26′,27.

Le démontage est assuré par un mouvement de translation du verrou 34 dans un mouvement de gauche à droite autorisant la libération de l'axe 16 hors du logement 42 et, de cette manière, le bras 28 n'est plus lié au balai 1.

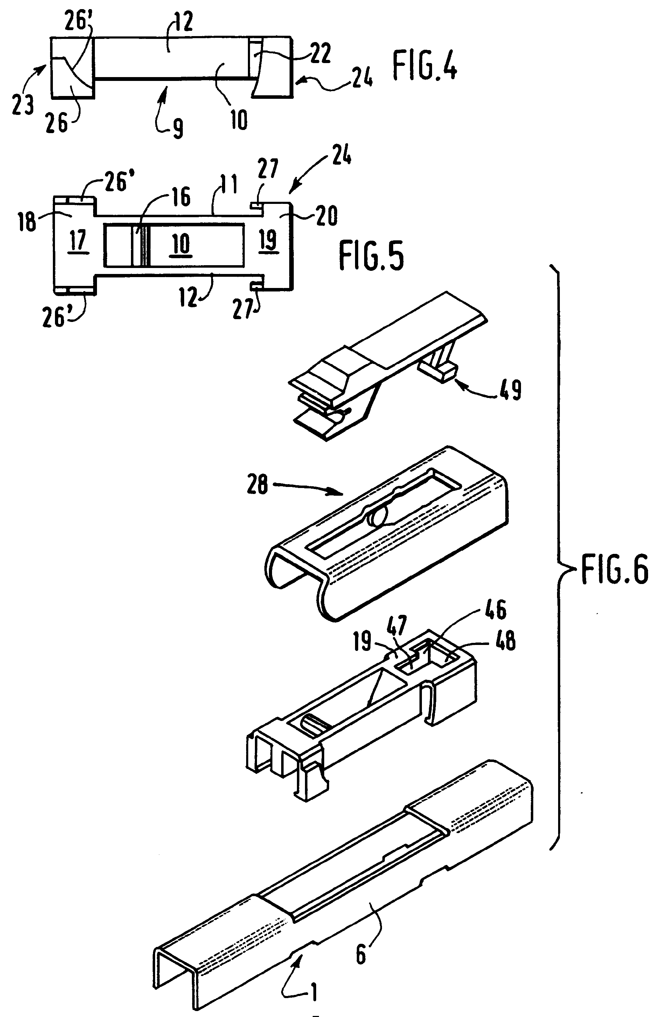

On se réfère maintenant à la figure 6 qui montre une variante de réalisation de l'invention dans laquelle des moyens de limitation de débattement du bras par rapport au balai sont prévus.

Pour ce faire, il est prévu dans le tablier arrière 19 une ouverture 46 consistant en une première partie rectangulaire 47 se poursuivant par une deuxième partie rectangulaire 48 et le verrou porte, à partir de la face dirigée vers le fourreau, une proéminence 49 en forme de "T" inversé dont la longueur de la barre horizontale du T correspond à la longueur de la deuxième partie rectangulaire de l'ouverture 46 et dont la largeur de la barre verticale du T correspond à la largeur de la première partie rectangulaire de l'ouverture 46.

Ainsi, lors du montage du verrou dans l'ouverture 33 du bras, la barre horizontale de la proéminence 49 pénètre dans la première partie de l'ouverture 48 et, lors du mouvement de translation du verrou permettant la solidarisation du bras avec le fourreau et le balai, la barre verticale de la prohéminence glissera le long des parties longitudinales de la première partie rectangulaire 47, la barre horizontale servant de limitation de butée en débattement du bras par rapport au balai.

## Revendications

1. Dispositif de liaison à articulation entre un bras d'essuie-glace (28) et un balai d'essuie-glace (1) le balai (1) présentant une ouverture (6) apte à recevoir un fourreau (9), ledit bras présentant en section une forme de "U" inversé au moins dans la région de ladite ouverture et apte à recouvrir cette ouverture en portant un moyen de verrouillage (34) reliant à articulation le bras (28) avec le balai (1), caractérisé en ce que le fourreau (9) porte des moyens de butée en translation (26,27) et/ou en rotation (46,47,48) du bras (28) par rapport au balai.

2. Dispositif de liaison à articulation selon la revendication 1, caractérisé en ce que le fourreau (9) porte une butée avant (26′) en translation coopérant avec des extrémités (38) du bras (28).

3. Dispositif de liaison à articulation selon l'une des revendications 1 ou 2, caractérisé en ce que la butée avant (26′) sert de surface de glissement en rotation du bras (28) par rapport au balai (1).

4. Dispositif de liaison à articulation selon l'une des revendications précédentes, caractérisé en ce que le fourreau (9) porte une butée arrière (27) en translation coopérant avec une saillie (32) issue du bras (28).

5. Dispositif de liaison à articulation selon l'une des revendications précédentes, caractérisé en ce que les butées (26′,27) sont portées par des pattes (23,24) issues du fourreau (9).

6. Dispositif de liaison à articulation selon la revendication 5, caractérisé en ce que les pattes (24) portant la butée arrière (27) présentent des surfaces de glissement pour les flancs (29,30) du bras (28).

7. Dispositf de liaison selon la revendication 5 ou 6, caractérisé en ce que les pattes (23,24) enjambent les flancs (3,4) de l'ouverture et portent des moyens de verrouillage (25) du fourreau sur le balai.

8. Dispositif de liaison à articulation selon l'une des revendications précédentes, caractérisé en ce que le fourreau (9) porté par le balai (1) et le verrou (34) porté par le bras (28) présentent des moyens de butée de limitation en débattement (46,49) du bras par rapport au balai ou inversement.

## Patentansprüche

1. Gelenkverbindung zwischen einem Scheiberwischerarm (28) und einem Scheibenwischerblatt (1), wobei das Blatt (1) eine Öffnung (6) zur Aufnahme eines Futters (9) aufweist, während der genannte Arm einen Querschnitt mit der Form eines umgekehrten "U" hat, zumindest im Bereich der genannten Öffnung, und geeignet ist, diese Öffnung durch ein Verriegelungsmittel (34) abzudecken, welches den Arm (28) gelenkig mit dem Blatt (1) verbindet, **dadurch gekennzeichnet**, daß das Futter (9) Anschlagmittel für die translatorische Bewegung (26, 27) bzw. Drehbewegung (46, 47, 48) des Arms (28) im Verhältnis zum Blatt besitzt.

2. Gelenkverbindung nach Anspruch 1, **dadurch gekennzeichnet**, daß das Futter (9) einen vorderen translatorischen Anschlag (26') aufweist, der mit Enden (38) des Arms (28) zusammenwirkt.

3. Gelenkverbindung nach einem der Ansprüche 1 oder 2, **dadurch gekennzeichnet** daß der vordere Anschlag (26') als Gleitfläche für die Drehbewegung des Arms (28) im Verhältnis zum Blatt (1) dient.

4. Gelenkverbindung nach einem der vorherigen Ansprüche, **dadurch gekennzeichnet**, daß das Futter (9) einen hinteren Anschlag (27) für die translatorische Bewegung trägt, der mit einem vom Arm (28) ausgehenden Vorsprung (32) zusammenwirkt.

5. Gelenkverbindung nach einem der vorherigen Ansprüche, **dadurch gekennzeichnet**, daß die Anschläge (26', 27) auf vom Futter (9) ausgehenden Klammern (23, 24) ruhen.

6. Gelenkverbindung nach Anspruch 5, **dadurch gekennzeichnet**, daß die den hinteren Anschlag (27) tragenden Klammern (24) Gleitflächen für die Flanken (29, 30) des Arms (28) aufweisen.

7. Gelenkverbindung nach Anspruch 5 oder 6, **dadurch gekennzeichnet**, daß die Klammern (23, 24) die Flanken (3, 4) der Öffnung umschließen und Mittel zur Verriegelung (25) des Futters am Blatt tragen.

8. Gelenkverbindung nach einem der vorherigen Ansprüche, **dadurch gekennzeichnet**, daß das auf dem Blatt (1) aufliegende Futter (9) und der auf dem Arm (28) aufliegende Riegel (34) Anschlagmittel für die Begrenzung der Verschiebung (46, 49) des Arms im Verhältnis zum Blatt oder umgekehrt aufweisen.

## Claims

1. A pivot link device between a windshield wiper arm (28) and a windshield wiper blade (1), the blade (1) having an aperture (6) capable of receiving a sleeve (9), the said arm having an inverted U-shaped section at least in the region of said aperture and capable of covering this aperture by bearing a locking means (34) connecting in articulated manner the arm (28) with the blade (1),
**characterised in that** the sleeve (9) bears stop means during translation (26, 27) and/or during rotation (46, 47, 48) of the arm (28) with respect to the blade.

2. A pivot link device according to Claim 1,
**characterised in that** the sleeve (9) bears a front stop (26') during translation cooperating with ends (38) of the arm (28).

3. A pivot link device according to one of Claims 1 or 2,
**characterised in that** the front stop (26') is used as a sliding surface during the rotation of the arm (28) with respect to the blade (1).

4. A pivot link device according to one of the preceding Claims,
**characterised in that** the sleeve (9) bears a rear stop (27) during translation cooperating with a projection (32) from the arm (28).

5. A pivot link device according to one of the preceding laims,
**characterised in that** the stops (26', 27) are borne by lugs (23, 24) derived from the sleeve (9).

6. A pivot link device according to Claim 5,
**characterised in that** the lugs (24) bearing the rear stop (27) have sliding surfaces for the flanks (29, 30) of the arm (28).

7. A pivot link device according to Claim 5 or 6,
**characterised in that** the lugs (23, 24) straddle the flanks (3, 4) of the aperture and bear means (25) for locking the sleeve on the blade.

8. A pivot link device according to one of the preceding Claims,
**characterised in that** the sleeve (9) borne by the blade (1) and the bolt (34) borne by the arm (28) have limit stop means during the deflection (46, 49) of the arm with respect to the blade or vice versa.
